(19) Europäisches Patentamt

European Patent Office

Office européen des brevets

(11) **EP 1 718 090 A1**

(12) **EUROPEAN PATENT APPLICATION**

(43) Date of publication:
**02.11.2006 Bulletin 2006/44**

(51) Int Cl.:
*H04Q 7/34* (2006.01)

(21) Application number: **05425268.9**

(22) Date of filing: **29.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Siemens S.p.A.**
**20126 Milano (IT)**

(72) Inventors:
• **Minelli, Lorenzo**
**20151 Milan (IT)**
• **Palagiano, Leandro Luigi Maria**
**20093 Cologno Monzese (IT)**

(54) **A method of optimising a cellular communication network, related system and computer program product**

(57)    At least one configuration parameter of a cellular communication network serving a given area (A) is optimised by:
- measuring over a set of points (P) of the area (A) served by the network (1) at least one operational parameter (RSCP, RSSI, Ec/Io) to obtain a measured value of such least one operational parameter,
- estimating (104) by calculation the variation of that operational parameter with respect to the measured value as induced by a variation of at least one configuration parameter value of the network (1), and
- optimising (106) that configuration parameter value as a function of the variation estimated by calculation on at least one operational parameter

Fig. 1

**Description**

Field of the invention

The invention relates to cellular communication networks.

More specifically, the invention relates to techniques for automatically analysing and optimising the configuration parameters pertaining to one or more data base needed in order to run a cellular communication network.

Description of the related art

Several tools are presently available for calculating the radio field strengths and interference level in a geographical area served by a cellular communication network. These tools are essentially based on:

- digitized territory maps,
- propagation models for the intended wavelengths to be used,
- system specific parameters such as (but not only) antenna type and heights, antenna orientation, transmitted power, and so on, and
- parameters aimed at simulating a specific traffic situation to be used via algorithms such as pseudo-random algorithms.

Exemplary of such tools are those tools known as "Planet", produced by MSI, "Atoll", produced by Forsk, "Astrix", produced by Teleplan and some other proprietary tools used by the radio planning departments of several mobile operator organisations.

A basic disadvantage of these prior art tools lies in that they mostly use a common basic propagation model in order to estimate the field strengths in a set of sub-areas (possibly with a high degree of resolution, with sub-areas of few square meters) of the area served. This propagation model can be tuned automatically for each specific sub-area by taking into account the measurement results that may be collected in the field.

The final results in terms of network optimisation representation obtainable by resorting to these tools are thus inevitably affected by errors or rough approximation. In fact, these tools essentially represent the situation of the radio coverage within the network in terms of statistical average expected behaviour and, as such, are unable to provide any accurate evaluation of punctual impact of even minor modifications of the system parameters.

Object and summary of the invention

In view of the foregoing, the need is felt for an automatic optimisation tool for cellular communication networks that may dispense with the disadvantages intrinsic in the prior-art arrangements developed in the foregoing.

The object of the present invention is to satisfy such a need.

According to the present invention, that object is achieved by means of a method having the features set forth in the claims that will follow in this document.

The invention also relates to a corresponding system and a computer program product directly loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the execution of the method related to the invention.

Reference to "at least one computer" is evidently intended to highlight the possibility for the present invention to be implement in a distributed/modular fashion.

The claims are an integral part of the disclosure of the invention provided herein.

In a preferred embodiment of the invention, at least one configuration parameter (e.g. the power emitted by a given antenna, antenna orientation, or antenna tilt, and so on) of a cellular communication network serving a given area is optimised by:

- measuring over a set of points of said given area at least one operational parameter (for instance the field strength of the radio signal) of said network to obtain a measured value of said at least one operational parameter,
- estimating by (machine-aided) calculation the variation of said at least one operational parameter with respect to said measured value as induced by a variation in said at least one configuration parameter, and
- optimising (that is changing the value of) said at least one configuration parameter as a function of said variation estimated by calculation and recognised as the best approximation to a target value.

As will become more evident in the following, the invention is notionally adapted to be applied for:

- optimising - any - configuration parameter of the cellular communication network,
- as a function of - any - operational parameter of the network which may be influenced by a change in the configuration parameter considered.

Consequently, the invention is not limited to any specific selection of the configuration parameters to be optimised or the operational parameters used as a basis for that optimisation. Similarly, the invention is not limited to any specific method used for optimisation.

The basic concept of the arrangement described herein lies in the fact that the operational parameter(s) is/are first measured (in the field) in order to obtain thoroughly accurate values for them that are in no way adversely affected by inaccuracies in any algorithmic method/model possibly adopted for estimating such values.

Conversely, a completely algorithmic process is adopted for estimating (based on any model currently available in the art) the variation of operational parameters induced by changes in any configuration parameter to be optimised over the (accurately measured) values of the operational parameters.

Any inaccuracies possibly intrinsic to the estimation model/algorithm adopted will thus adversely affect only the additional variations used in the optimisation process, but not the basic data, and this will result in far more accurate final result of the optimisation process.

In brief, the arrangement described herein introduces a sort of calculation engine that already takes into account (in a thoroughly accurate manner, due to the fact that the respective input values are measured in the field and not merely estimated) of factors such as unexpected propagation characteristics, land usage, slow fading, loss of signal orthogonality, and so. This approach will ensure that a reliable representation of the real coverage status, related to a well-known value set of configuration parameters is used as the basis for optimisation and design.

The optimisation process can be, as usual in the foregoing, implemented by resorting to any known method in the art and essentially involves notionally imposing a number of changes in the network configuration parameters to find the "best" arrangement of the configuration parameters, namely the arrangement of configuration parameters that gives closest results (that is operational parameter values) to the network design target.

The method described herein involves a number of significant advantages.

First of all, the simulation (calculation) of the changes induced in the operational parameters (including certain key operational parameters such as field strength and interference values) is far more accurate for each sub-area of the coverage area of the network. This is because the real, measured parameters in each sub-area are taken as the starting point of configuration parameter value change simulation /calculation process.

In that respect, it will be appreciated that measuring the operational parameters of the network may in fact include some algorithmic processing, for instance averaging in a weighed form a number of values over space and/or time. This algorithmic processing is essentially aimed at further increase the accuracy and validity of the measurement by dispensing with measurement errors and is only loosely related to the process of simulating the expected network behaviour.

Further benefits are related to the reduction of time needed in order to "tune" the network by evaluating reliably different solutions in terms of configuration parameters and avoiding the need of repeating measurement campaigns (which were needed in the past in order to check if the approximation resulting from the simulation, performed with foregoing methods and tools, were acceptable).

Additionally, the experimentation carried out so far by the applicant Company has shown that the arrangement described herein leads to significant improvements of reliability and accuracy in the evaluation of such key operational parameters as the Received Signal Code Power (RSCP), the Received Signal Strength Indicator (RSSI), and the Signal Interference Wideband Ratio (Ec/Io). These parameters are particularly significant in providing proper operation in terms of soft-handover, cell selection and reselection, inter-frequency-handover and intersystem handover in cellular networks such as UMTS .

Brief description of the annexed drawings

The invention will now be described, by way of example only, with reference to the enclosed figures and drawings, wherein:

- figure 1 is a functional diagram exemplary of the criteria of application of the method described herein to a cellular communication network, and
- figure 2 is a flow-chart exemplary of a possible implementation of the method described herein.

Detailed description of preferred embodiments of the invention

A glossary is reproduced below providing explanations of certain terms of common usage in the art to which the invention relates.

Glossary

| | |
|---|---|
| Optimisation (of a network) | A process of data analysis and definition of actions to be carried out in order to modify a network and its components with the aim of enhancing network performance and achieve target values (or at least to get the values closest thereto) pursued in the network design. |
| Target value (of a parameter or variable) | The value of the parameter or variable defined as the purpose of the project. |
| Operational parameter | A variable measuring some event (or physical entity) able to represent an aspect of the operation of a system, or physical network, or some elements constituting each other or both. |
| Configuration parameter | A variable measuring and defining some condition or conditioning some network element operation so that the system (or network) behaviour is affected by the value of the parameter itself |
| UMTS | Universal Mobile Telecommunications System |
| Digital or Digitised Territory Map | A geographical map represented by means of numerical values that can be processed via a computer (and proper software) so that the information contained therein can be used for whatever aim. |
| Service Area | In the mobile communication technical jargon, this term is normally used to indicate a geographical area in which voice or data communication can be set up and at least one of the serviced user involved is a mobile one. The Service Area can be related to more or just only one Radio Base Station |
| Radio Base Station | In the mobile communication technical jargon this term is normally used to indicate at least a set of radio transmitting and receiving equipment and a geographical place where this equipment is located if the purpose of the equipment is to support a radio link connection with one or more mobile users. |
| Service sub-Area | A fraction of the service area in which one or more parameters describing the Area or service attributes or parameters can be considered by assuming an average value without having to take into account all the different values these parameters can have in different places within the same sub-area. |

| | |
|---|---|
| Granularity ( of the representation) or Map Resolution | This term indicates the dimension of the sub-area in respect of the dimension of the whole Area considered, or the portion of time to which the data to be analysed are referred in respect of the whole amount of time for which analysis of data is to be performed. In general, "granularity" is a concept which refers to the minimum entity in which is worth (or possible) to split the entity under analysis |

(continued)

| Computer program | A set of conventional expressions (words or numeric values expressed in alphabetic or digital coding) adapted to be processed by a computer machine in order to perform logical or mathematical operations on other information called "input data" and produce results expressed in words or numeric values called "output data" |
|---|---|
| Software tool | A computer program aimed at processing some specific kind of data in order to produce results consequent to mathematical and/or logical rules defined in the program itself. The purpose of a software tool is to automatically execute repetitive operations that can be done by human beings but would demand a "non creative" and expensive effort. |
| Cellular communication network | A set of equipment, generally distributed over a geographical region, by means of which mobile users can activate a radio connection so that a phone call or a data call can be set up using a radio transceiver (called hand held or user terminal) normally carried by the user. "Cellular" means that the "Network" may be composed by several more or less overlapping service Areas in order to ensure the continuity of the service all over some geographical area. |
| Method | A rule or a set of rules describing and defining an activity |
| Network performance | An effect or a set of effect that can be measured in order to describe the behaviour of the network (that is the results or events produced by stimulating the network with some other events). Network design and implementation is generally aimed at obtaining well defined values (target values) for some performance of the network (Radio signal minimum level within the service area, probability to get service, probability to lose service, probability to maintain the radio connection for a certain time or moving along a certain distance, and other events) |
| Antenna orientation | The direction in which the maximum signal strength can be received at a defined distance from the antenna; normally the orientation is defined by an angle value, lying in the horizontal plane, measured from geographically referenced direction. |
| Antenna Tilt | The angle (lying in the vertical plane) defining the difference between the horizontal reference line and the effective direction pointed by the antenna (that is corresponding to the direction of the maximum power radiated). |
| Radio signal strength | The power level (or voltage level) that can be measured and indicated by a radio receiver able to receive the wanted (and measure only the wanted) radio signal. |
| Weighted averaging | A mathematical operation by which different values for one or more variables are put in a mathematical expression in which each value is multiplied by a coefficient which takes into account some other effects due to the real situation and to some environmental conditions. |

(continued)

| | |
|---|---|
| In field measurement | A measurement of one or more physical entities or events carried out by means of physical instruments directly on network elements or/and in places where effects of the network as actually deployed can be stimulated and/or measured. |
| Network Tuning | The activity performed by defining actions and modifying network entities and parameters in order to change (improve) the network behaviour measured by one or more operational parameters. |
| Network / Service / access quality | Quality is a word indicating how much the perceived or measured value of an event or of a sequence of events is close to the expected value. In most cases related to telecommunication networks, Quality is measured by the probability that something wanted happens or that something not wanted do not happen. The quality is better inasmuch as the probability that a wanted event happens is higher and, at the same time, the probability for an unwanted event to occur is lower. |
| RSCP | Received Signal Code Power |
| RSSI | Received Signal Strength Indicator |
| C-PICH | Radio frequency signal emitted by each RBS in order to inform mobile equipments about its availability and characteristics relevant to the how to set up and maintain a possible radio connection. |
| Ec / Io | Signal over interference (wide band) power ratio |
| Cell selection and re-selection | A procedure defined by rules by which a mobile radio unit is enabled to recognise by which RBS the service can be supported at best conditions |
| handover | A procedure by which a radio connection is supported by different RBS in subsequent time intervals. |
| Soft -handover | A procedure by which the same radio connection can be supported at the same time by several RBS the best one of which is selected instant by instant in order to give continuity to the service (the ongoing call) |
| Inter frequency handover | A Procedure by which handover is performed involving two transceivers using two different radio frequencies and pertains to the same or to two different RBS. |
| Inter system handover | An handover performed between two RBS pertaining to two different systems (E.G. : UMTS to GSM or GSM to UMTS) |

(continued)

| Interference (radio) | Interference is an effect created within a receiver due to the reception of at least two signals: the first one being the "wanted" signal and the other one is the "unexpected" signal. By the nature of the receiver, if the power difference between the received signals has a value within a certain range, the receiver may show difficulty in recognizing and reproducing the "wanted" signal. This has as a consequence the introduction of some wrong information in the receiver output signal. The effect is strongly dependent from the difference in power between the received wanted signal and the power cumulated by all the received but "not wanted" signals (among the others there are the Thermal noise and the man made RF noise) |
|---|---|
| Critical area | A critical area is an area in which one or more target values related to operational parameters are not achieved or assured |
| Receiver dynamics | Receiver dynamics is the range of power values by which the correct reconstruction, in the base band, of the received RF signal is performed. |
| Call drop | Is the event described as the loss "of the radio connection" and "of the continuity of service" |
| Access failure | Is the event described as the unsuccessful outcome of an attempt done by a user in order to establish a radio connection |

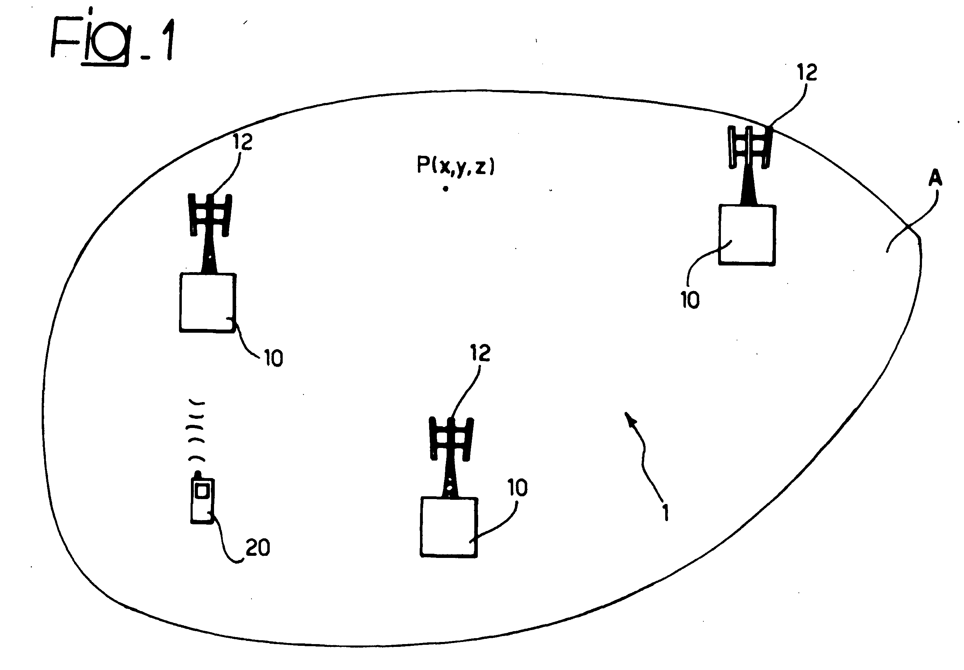

In figure 1, reference 1 indicates as a whole a cellular communication network, such as e.g. a UMTS communication network.

The network in question includes a plurality of radio base stations 10 provided with respective antenna assemblies 12 intended to provide cellular coverage of a served area A wherein the user mobile terminals 20 are located. A generic point P in the served area A will be denoted by geographical coordinates x, y and z, z being an altitude coordinate.

A network as shown in figure 1 is characterized by a number of "configuration parameters" that essentially identify the network "how it is", in terms of e.g. number and location of the base stations 10, antenna types equipping those stations, antenna heights, antenna downtilt, antenna azimuth, transmission power of the pilot channel (P-CPICH), the power associated with all the other control channels, and so on.

Some of these configuration parameters will be specifically dealt within the framework of the exemplary description provided herein. However, as already indicated in the introductory portion of the description, the present description provided herein. However, as already indicated in the introductory portion of the description, the present invention is in no way related to the specific choice of any of those configuration parameters.

Similarly, a network, as schematically represented in figure 1, will be characterized by a number of "operational parameters", whose value generally vary for each specific point P (x, y, z) of the served area A due to a wide variety of factors that rule the interaction of the network equipment with the territory served.

Stated otherwise, the "operational parameters" are representative of the network "how it works" at each specific point P (x, y, z) of the area served.

The exemplary description that follows will primarily refer to three basic operational parameters, namely the Received Signal Code Power (RSCP), the Received Signal Strength Indicator (RSSI) and the signal/interference wideband ration (Ec/Io) of cellular communication network of the UMTS (Universal Mobile Telecommunications System) type.

This set of parameters is merely exemplary of one or more operational parameters that may be taken within the framework of the arrangement described herein: therefore, the invention is in no way limited to the specific choice of any such set of operational parameters.

As it is well known, in UMTS-FDD cellular networks (FDD being an acronym for Frequency Division Duplex) the "pilot" channel designated P-CPICH plays a key role as it is used (by mobile terminals) in the network search procedure (the absence of a P-CPICH channel means in practice the absence of the network) and is a part of the decision process concerning the basic algorithms that regulate network operation.

Exemplary of these are:

- cell selection and re-selection,
- soft-handover inter-frequency handover, and
- inter-system handover and reselection.

More generally, the receiving and decoding possibility of the pilot channel P-CPICH defines the service area of a given cell. Consequently, optimising coverage and presence at the proper power level of the pilot channel all over the wanted service area, plays a key role in properly designing and implementing the related network.

Two basic entities that characterise the quality of the P-CPICH channel are the power level (currently designated RSCP) and the ratio (Signal to Interference) designated Ec/Io.

Specifically, this latter ratio is defined, for the i-th cell in a network as:

$$(Ec/Io)_i = RSCP_i/RSSI$$

The total interference level (RSSI) represents the power level (related to unwanted signals) measured over the 5 MHz band of an UMTS carrier.

The value of the ratio Ec/Io has an appreciable impact on the performance of UMTS network. In fact, experience gathered taking care of UMTS networks shows that a low value for this parameter causes access failures and call drops, which are two key factors in evaluating the quality of the service as perceived by the user of the cellular network.

The total interference level RSSI includes contributions from all the signals present over a given UMTS carrier namely, in the absence of external sources of interference (absence of non network generated signals), by the signals of all the cells that transmit over the specific frequency that is present in a given area, with an additional thermal noise contribution.

Consequently, the fact that at a given point in the service area signals from many cells may be received, the non correlated sum of all these signals may result in an undesirably high interference level in addition to the possible presence of those "useful" signals that can be used for soft-handover.

In conventional second-generation (2G) systems such as GSM systems, the superposition of cell service areas and consequent mutual interference can be managed by judicious assignment of frequencies to the various cells. Conversely, in third-generation (3G) systems such as UMTS-FDD networks, the unavoidable superposition of cells operating with the same radio frequency may have positive effect and must be analysed in detail becoming subject of careful optimisation. Optimising, as precisely as possible, coverage by the P-CPICH pilot channel is thus a key factor in order to ensure proper operation of such a 3G network.

In the following, optimisation of this "operational parameter" will be exemplified by referring the possible impact on that operational parameter of a number of "configuration parameters" of the network including:

- type, height, down tilt (electrical and mechanic) and azimuth of antennas,
- emission power of the P-CPICH channel and all the other control channels.

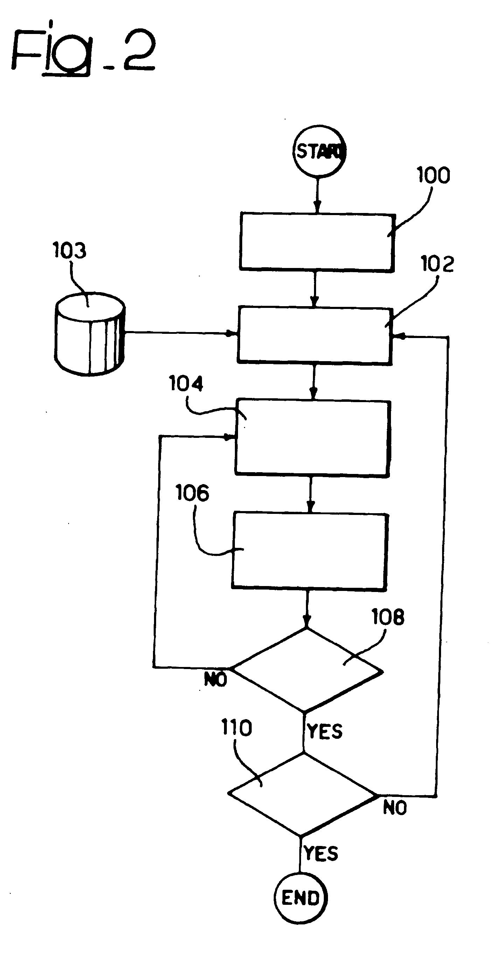

In the flow-chart of figure 2, after a start phase, a step 100 is representative of an in-the-field measuring campaign aimed at measuring one or more "operational parameters" of the network 1 over a set of points P (x, y, z) of the related area A.

Such a measurement campaign can be carried out by known means, e.g. by using a scanner device that is caused to travel within the area A, and leads to the collection of a sufficiently extensive set of points over the area A and, related to them, a collection of measured values for a certain set of "operational parameters" (e.g. the P-CPICH level, the RSCP and Ec/Io). Such scanner devices are well known in the art and are currently used by all major operators of mobile communications networks, thus making it unnecessary to provide a more detailed description herein. Similarly known is the fact that such scanner devices are usually equipped (and/or may be interfaced with) processing facilities adapted to perform the processing steps discussed in greater detail in the following.

In a step 102 proper analysis and result representation, done by the method and related tool, leads to the identification of a given configuration parameter selected out of a database 103 including all or part of the configuration parameters of the network. Exemplary of such parameters may be e.g. the position and the height of each antenna site 10, the type of antenna used, the azimuth data thereof, etc.

The selection step 102 may actually include extracting a plurality of configuration parameters which are subsequently involved in the optimisation process as it is described in the following.

In order to facilitate proper understanding of the invention, reference will be made herein to a single configuration parameter being considered at a time.

In a subsequent step 104, a variation of the configuration parameter selected in the step 102 is assumed. The "impact" or "effect", produced by said variation on any of the "operational parameter(s)" that has to be considered, is estimated by machine automatic calculation (i.e. a method related tool).

This estimation is based on any model currently available in the art for that purpose.

The variation in the operation parameter(s) thus induced on the measured value(s) gathered during the step 100 is evaluated within the optimisation step 106.

Again, this step can be based on any optimisation process/tool known in the art, thereby making it unnecessary to provide a more detailed description herein.

By way of a simplified explanation, the step 106 may consist of a simple comparison of the value(s) of the operational parameters(s) after and before the variation calculated as a function of the change assumed in the configuration parameter(s) considered for optimisation.

Such a comparison, schematically indicated as 108, aims to ascertain whether the (calculated) values resulting from the variation are better, worse or equal (within a given range of values) than the previous values. The resulting new values are usually considered better if they are nearer to the network design target values, and worst if they appear to move afar from the target values.

Following the typical arrangement of optimisation process, the step 108 leads to different variations being imposed to the configuration parameters considered for optimisation purposes until an optimum value (no longer adapted to provide appreciable improvements in the operational parameter(s)) is found for one or more configuration parameters considered (favourable outcome of step 108).

In a step 110 a check is made as to whether all the configuration parameters to be considered for optimisation purposes have been taken into account.

In the negative case, a new configuration parameter value (or a new set of configuration parameter values) is selected in the step 102 and a sequence of the steps 104 to 108 is repeated as described in the foregoing.

When the step 110 indicates that all the configuration parameters to be considered for optimisation purposes have been taken into account (positive outcome of step 110) the process evolves to the final step, indicating that network optimisation has been completed.

Those of skill in the art will promptly appreciate that the same basic process may be adopted in any optimisation process and that essentially leads also to identify "critical" areas (for instance, areas of insufficient pilot signal coverage) laying within the considered (measured in step 100) area and to decide appropriate counter measures.

In the following, some additional details will be provided in respect of advantageous embodiments experimented by the applicants.

For instance, the case will first be made of the signal level of the pilot channel $RSCP^{CPICH}$ having been measured and collected in the step 100 for each point P (x, y, z) in a set of measurement points selected.

The values may be either in the form of single samples or as collections of multiple samples subsequently subject to averaging.

This amounts to measuring, over a set of points of the area A served by the network, at least one operational parameter (e.g. RSCP) to obtain a measured value of the parameter.

Any variation of that parameter, with respect to said measured value as induced by a value variation in one or more configuration parameters of the network, can then be calculated.

For instance, a new value for the parameter $RSCP_{CPICH}$ in a given cell (for instance cell 1) can be written as follows

$$RSCP_{1w}^{CPICH-new} = RSCP_{1w}^{CPICH} \Delta_{1w} \quad [W]$$

wherein the factor $\Delta_{1w}$ expresses the action of the variation of one or more values of configuration parameters such antenna down tilt and pilot channel power.

This effect can be expressed e.g. as a function of two parameters $\Delta G_{1dB}$ and $\Delta P_{1dB}$. Specifically, $\Delta G_1$ ($\Delta G_{1dB}$ when expressed in dBs) incorporates the difference related to the antenna gain after a variation induced in one of the characteristic entities in the direction of the point under examination such as, e.g. variation in the downtilt angle. Conversely, $\Delta P_1$ identifies the variation (in dB) in the pilot channel power. Specifically, the following relationship will apply

$$\begin{cases} \Delta G_{1dB} \\ \Delta P_{1dB} \end{cases} \Rightarrow \Delta_{1w} = \log^{-1}\left(\frac{\Delta G_{1dB} + \Delta P_{1dB}}{10}\right) \quad [W]$$

The same relationship can be expressed in logarithmic (i.e. dB) scale as follows:

$$RSCP_{1dBm}^{CPICH-new} = RSCP_{1dBm}^{CPICH} + \Delta G_{1dB} + \Delta P_{1dB} \quad [dBm]$$

The same approach can be resorted to for estimating by machine-aided calculation the variation of e.g. the downlink RSSI parameter based on a variation done in the configuration parameters of the networks.
Within the 5 MHz bandwidth of an UMTS-FDD carrier, the value of the RSSI parameter at a given point in space can be generally expressed as:

$$RSSI_w = I + P_1^{R-CCH} + \sum_{i=2}^{N} P_i^{R-CCH} \quad [W]$$

In the formula above, the factor I incorporates the following components:

- thermal noise,
- interference due to non-decoded cells,
- interference due to the power employed by traffic channels, and
- possible external interference.

$P^{R-CCH}$ is the contribution of each cell to the power received at the point in question, and can be expressed as:

$$P^{R-CCH} = RSCP_w^{CPICH} + RSCP_w^{CPICH} \sum_{j=1}^{M} \delta_j \quad [W]$$

that is: sum of the power received by the CPICH channel (indicated in the previous formula by the factor $RSCP^{CPICH}$) and the other Control Channels, expressed in terms of power with respect to the pilot channel, the whole as a function of an off-set parameter $\delta$.
By setting:

$$\delta^{CCH} = \sum_{j=1}^{M} \delta_j$$

One obtains

$$P^{R-CCH} = RSCP_w^{CPICH}\left(1 + \delta^{CCH}\right) \quad [W]$$

the parameter $\delta^{CCH}$ can be computed and is constant for a given configuration of the control channels.

By reverting to the formula that expresses the parameter RSSI, and highlighting the term concerning one given cell (e.g. one can refer to cell number 1), one can write the following relationship:

$$RSSI_w = I + P_1^{R-CCH} + \sum_{i=2}^{N} P_i^{R-CCH} \quad [W]$$

If one assumes that any of the configuration parameters are changed for the cell in question one obtains

$$RSSI_w^{new} = I + P_1^{R-CCH-new} + \sum_{i=2}^{N} P_i^{R-CCH} \quad [W]$$

which can be re-written in principle as

$$RSSI_w^{new} = I + P_1^{R-CCH} \times \Delta_{1w} + \sum_{i=2}^{N} P_i^{R-CCH} \quad [W]$$

This expression is a function of the parameters represented by the letter $\Delta$, which are just the possible variations of power and antenna gain (dictated by variations in tilt and azimuth) and possible variations in the control channels.

By using such a new formulation for the parameter RSSI, the quality of the pilot channel P-CPICH, after the variations introduced in the configuration parameters, can be simply estimated in terms of Ec/Io ratio as:

$$\frac{E_c^{CPICH-new}}{I_o}_{1dB} = RSCP_{1dBm}^{CPICH-new} - RSSI_{dBm}^{new} \quad [dB]$$

While the previous expressions refer to a change in the configuration parameters concerning a single cell, it will be appreciated that the calculation can be extended to multiple variations of configuration parameters in a plurality of cells.

The explanation provided in the foregoing has been deliberately simplified in order to facilitate understanding of the basic principles of the invention. Such description is based on the assumption that all cells that can be detected (that is: the radio signal transmitted by them can be decoded and used by the mobile terminal) at a certain point P(x, y, z), within the area A, equals the number of cells that are included in the measurement carried out during the step 100.

In actual fact this assumption may not be completely correct because other cells, whose contribution is not properly measured during the step 100 due to the reduced dynamics of UMTS receivers or other effects, may be present in actual network operation.

In order to take into account the impact of this phenomenon, the calculated estimation of the parameter RSSI can be modified according to an empirical function. In this way it is possible, with the configuration parameters changed, to identify areas were critical value of the ratio Ec/Io for the best server cells is reached under specific (simulated) conditions; in these conditions and in these areas, service quality problems may rise causing unsatisfying network performance concerning access and call drops.

Once critical zones are identified, the method drives to the analysis in detail of the composition of the RSSI in field measured parameter, and thus leads to identify the main source of interference and, a while further, the most appropriate actions to be taken are outlined in order to cope as far as possible with the identified problem.

In fact, the examples mentioned in the foregoing show that and how variation of at least one operational parameter with respect to the measured (and thus absolutely accurate) value as induced by a variation in at least one configuration parameter can be calculated.

Different possible variations for the configuration parameters can thus be tested. The consequent induced variations of at least one operational parameter with respect to the measured value as induced by the variations assumed, identifying then an induced variation that corresponds to the "optimum" value for the operational parameter considered. The corresponding configuration parameter value is thus to be considered "optimised" as a function of the value variation, of the operational parameter, estimated by calculation.

It will be appreciated that the arrangement described herein makes it possible, starting from simple measurements in terms of coverage (step 100) to exactly calculate (at least as much as it is relevant) by automatic machine data processing (thus avoiding the need of carrying out additional measurement campaigns in order to check configuration change effects) the impact of variations in the configuration parameters of the UMTS network. This is done without having to physically implement those changes, and leads finally in the condition of being able to select the best mixture of variations in the network configuration parameter values which leads to optimise the network behaviour (performance closest to the design target).

Without prejudice to the underlying principles of the inventions, the details and embodiments may thus vary, even appreciably, with respect to what has been described, by way of example only, without departing from the scope of the invention as defined by the annexed claims.

## Claims

1. A method of optimising (104) at least one configuration parameter (10, 12) of a cellular communication network serving a given area (A), the method including the steps of:

   - measuring (100) over a set of geographical points (P) of said given area (A) at least one operational parameter of said network to obtain at least one measured value of said at least one operational parameter,
   - estimating (104) by calculation the variation of said at least one operational parameter with respect to said measured value as induced by a variation in said at least one configuration parameter, and
   - optimizing (106) said at least one configuration parameter as a function of said variation estimated by calculation on said at least one operational parameter.

2. The method of claim 1, **characterised in that** said at least one configuration parameter is selected out of the group consisting of antenna location, antenna type, antenna down tilt, antenna azimuth, emitted signal power at the antenna.

3. The method of any of the previous claim, **characterised in that**, said cellular communication network being an UMTS network, said at least one configuration parameter is selected out of a group consisting of emitted pilot channel power and power used for all the control channels.

4. The method of any of the previous claims, **characterised in that** it includes the steps of obtaining said measured value of said at least one operational parameter as a single sample of said at least one operational parameter.

5. The method of any of the previous claims, **characterised in that** it includes the steps of obtaining said measured value of said at least one operational parameter as an average, such as a weighted average, value of a plurality of samples.

6. The method of any of the previous claims, **characterised in that** said at least one operational parameter is selected out of the group consisting of:

   - signal level (RSCP),
   - total interference level (RSSI), and
   - signal/interference ratio (Ec/Io).

7. A system for of optimising (104) at least one configuration parameter (10, 12) of a cellular communication network serving a given area (A), the system including:

   - a scanner device for measuring (100) over a set of geographical points (P) of said given area (A) at least one operational parameter of said network to obtain at least one measured value of said at least one operational parameter, and
   - a processing unit configured for performing the steps of the method of any of claims 1 to 6.

**8.** A computer program product loadable in the memory of at least one computer and including software code portions for performing the method of any of claims 1 to 6.

Fig.1

# Fig_2

**European Patent Office**

## EUROPEAN SEARCH REPORT

Application Number

EP 05 42 5268

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 561 841 A (MARKUS ET AL) 1 October 1996 (1996-10-01) * column 2, line 1 - column 3, line 61 * * column 8, line 14 - line 55 * * column 9, line 3 - line 46 * * column 10, line 24 - line 64 * * abstract; claims 1-12; figure 1 * ----- | 1-8 | H04Q7/34 |
| X | US 2003/147353 A1 (CLARKSON KENNETH L ET AL) 7 August 2003 (2003-08-07) * the whole document * ----- | 1-8 | |
| X | US 5 465 390 A (COHEN ET AL) 7 November 1995 (1995-11-07) * column 5, line 15 - line 67 * * column 10, line 48 - line 59 * * figure 1 * ----- | 1-8 | |
| A | US 6 141 565 A (FEUERSTEIN ET AL) 31 October 2000 (2000-10-31) ----- | 1-8 | TECHNICAL FIELDS SEARCHED (Int.Cl.7) H04Q |

The present search report has been drawn up for all claims

| Place of search | Date of completion of the search | Examiner |
|---|---|---|
| The Hague | 28 September 2005 | Coppieters, S |

EPO FORM 1503 03.82 (P04C01)

## ANNEX TO THE EUROPEAN SEARCH REPORT
## ON EUROPEAN PATENT APPLICATION NO.

EP 05 42 5268

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2005

| Patent document cited in search report | | Publication date | Patent family member(s) | | Publication date |
|---|---|---|---|---|---|
| US 5561841 | A | 01-10-1996 | AT | 202257 T | 15-06-2001 |
| | | | AU | 670424 B2 | 18-07-1996 |
| | | | AU | 3354493 A | 01-09-1993 |
| | | | DE | 69330342 D1 | 19-07-2001 |
| | | | DE | 69330342 T2 | 31-10-2001 |
| | | | EP | 0623272 A1 | 09-11-1994 |
| | | | FI | 920291 A | 24-07-1993 |
| | | | WO | 9315591 A1 | 05-08-1993 |
| | | | JP | 3280025 B2 | 30-04-2002 |
| | | | JP | 7503345 T | 06-04-1995 |
| | | | NO | 942760 A | 23-09-1994 |
| US 2003147353 | A1 | 07-08-2003 | AU | 6958500 A | 10-05-2001 |
| | | | BR | 0006769 A | 14-08-2001 |
| | | | CA | 2324387 A1 | 04-05-2001 |
| | | | CN | 1295388 A | 16-05-2001 |
| | | | EP | 1098545 A2 | 09-05-2001 |
| | | | JP | 2001204069 A | 27-07-2001 |
| US 5465390 | A | 07-11-1995 | DE | 69307159 D1 | 20-02-1997 |
| | | | DE | 69307159 T2 | 07-08-1997 |
| | | | EP | 0556146 A1 | 18-08-1993 |
| | | | FR | 2687520 A1 | 20-08-1993 |
| | | | JP | 3275426 B2 | 15-04-2002 |
| | | | JP | 6085733 A | 25-03-1994 |
| US 6141565 | A | 31-10-2000 | NONE | | |

EPO FORM P0459

For more details about this annex : see Official Journal of the European Patent Office, No. 12/82